# EUROPEAN PATENT APPLICATION

(11) **EP 4 116 752 A1**
(43) Date of publication of application: **11.01.2023**
(21) Application number: 22164406.5
(22) Date of filing: 25.03.2022
(51) Int. Cl.: G02B 6/42, G02B 6/43

(54) **FIELD-CONFIGURABLE OPTICAL SWITCH IMPLEMENTATIONS WITHIN MULTI-CHIP PACKAGES**

(30) Priority: 25.06.2021 US 202117359374
(71) Applicant: Intel Corporation, Santa Clara, CA 95054 (US)
(72) Inventor: O'KEEFFE, Conor, Cork, T12 PR16 (IE); HOSSEINI, Kaveh, Livermore, 94550 (US)
(74) Representative: HGF

(57) **Abstract**

An integrated circuit (IC) package comprising an optical die comprising a configurable optical switch. The configurable optical switch comprises an optical switch operably coupled to one or more optical transceivers. An optical connector comprises at least one exo-package optical port. The at least one exo-package optical port is operably coupled to the configurable optical switch. The configurable optical switch is to pass an optical signal on the at least one of the one or more exo-package ports to at least one of the one or more optical transceivers, and an IC die comprising electronic circuitry is operably coupled to the one or more optical transceivers.

## Description

### GOVERNMENT INTEREST STATEMENT

This invention was made with support from the United States Government under Agreement No. HR0011-19-3-0003, awarded by DARPA. The Government has certain rights in the invention.

### BACKGROUND

The photonics industry has experienced a significant growth in recent years due in part to the widespread adaptation of long-distance fiber optic communications by internet service providers and cloud-based data centers. Advantages of optical fiber-based data communications over traditional copper-based data communications is greatly increased long-haul bandwidth and significantly lower energy per bit. As attainable optical bandwidths can be significantly larger than copper-based electronic signal bandwidths, there is a growing demand by large users of optical communications to extend the bandwidth capabilities of their optical networks.

Optical interconnect is also a target of in high performance computing devices as espoused by the Facebook and Microsoft Co-Packaged Optics (CPO) collaboration initiative for datacenters processing functions. Electrical I/O (input output) has practical bandwidth limitations owing to package and PCB (printed circuit board) interconnect limitations of approximately 112 gigabits per second (Gbs) per differential pair especially if considering modest backplane interconnect. Differential pairs consume significant package and PCB area owing to the need to keep controlled impedance routing. The bandwidth density available to high performance compute packages can be limited as a result, consequently this can become a bottle neck to compute performance. Optical I/O does not present the same bandwidth bottle-neck limitation as electrical I/O. In addition, lower power consumption optical interface enabling photonic components are emerging to enable high bandwidth, high density interfaces. Simultaneously, greater numbers of photonic devices in the form of chiplets and tiles are being packed into single packages for higher efficiency and lower interface latency. As a result, multichip packaging (MCP) for optoelectronic and photonic chips are increasingly available and implemented in optical data networks and more recently high-performance compute interconnect. Solutions for increasing data bandwidth, package perimeter edge bandwidth density and lower power consumption include increasing the number and density of optical fiber connections to photonic MCPs. MCP component designers have to provision a practical or economical means to support different interconnect bandwidth connectivity configurations without the need to continuously add more optical I/O. Currently, high-density fiber configurations to or between photonic chips within a MCP are not field-configurable. Once instantiated, the fiber assignments connection two or more components may not be changeable to meet dynamic bandwidth and signal traffic routing demands. This may be particularly cumbersome for application specific integrated circuits included in the MCP. A more flexible solution is needed to enable dynamic routing of optical fiber assignments to ports on photonic chips within an optical MCP to meet dynamic bandwidth demands and to maintain optimal performance of the MCP.

### BRIEF DESCRIPTION OF THE DRAWINGS

**Fig. 1A** illustrates a plan view in the x-y plane of a first embodiment of an optical switching multichip package (OSMCP) according to some embodiments of the disclosure.
**Fig. 1B** illustrates a plan view in the x-y plane of a second embodiment of a OSMCP according to some embodiments of the disclosure.
**Fig. 1C** illustrates a plan view in the x-y plane of a third embodiment of a OSMCP, according to some embodiments of the disclosure.
**Fig. 1D** illustrates a plan view in the x-y plane of fourth embodiment of a OSMCP, according to some embodiments of the disclosure.
**Fig. 2** illustrates an exemplary platform comprising multiple instantiations of an OSMCP in optical communication, according to some embodiments of the disclosure.
**Fig. 3** illustrates a switching protocol flow chart for bandwidth management within a compute node comprising a controller OSMCP according to some embodiments of the disclosure.
**Fig. 4** illustrates a process flow chart for a method of fabrication of a multichip optical package (e.g., OSMCP 100), according to some embodiments of the disclosure.
**Figs. 5A-5E** illustrate a cross-sectional view in the x-z plane of the method of fabrication of an OSMCP, according to some embodiments of the disclosure.
**Fig. 6** illustrates a block diagram of computing device 600 as part of a system-on-chip (SoC) package in an implementation comprising any of the OSMCPs described herein, according to some embodiments of the disclosure.

### DETAILED DESCRIPTION

Disclosed herein is an optical switching multichip package (OSMCP) comprising an on-package at least one configurable optical switch monolithically or heterogeneously integrated on a semiconductor die (e.g., an optical switch chiplet) comprising an integrated optical switching network coupled to optical ports. In some embodiments, the disclosed optical multichip package comprises the configurable optical switch co-packaged with one or more optical transceivers, also monolithically or heterogeneously integrated on a semiconductor die (e.g., an optical die comprising optical transceivers) and at least one IC die comprising electronic circuitry. The electronic circuitry may comprise an electronic logic circuit, such as a processor or a field-programmable gate array (FPGA), that is electrically coupled to the configurable optical switch, either directly or through another semiconductor die to translate configuration. The electronic logic circuit may be further coupled to a non-volatile memory, where a software or firmware algorithm may be stored as optical switch configuration information in binary format in a non-volatile memory as dynamic random-access memory (DRAM) as a read-only memory (e.g., an erasable programmable read-only-memory, EPROM or EEPROM) A logic device may be a microprocessor or a FPGA. In some embodiments, the optical switch configuration information may be stored as processor readable software or as logic configuration code for a FPGA. A software algorithm may comprise instructions to the logic circuit to output logic signals to the configurable optical switch that reconfigure the optical switching network port assignments. A FPGA may be programmable to perform a configuration of the optical switch within the OSMCP.

In some embodiments, the electronic logic circuit on the IC die may comprise a microprocessor as a central processing unit (CPU), a graphical processing unit (GPU), infrastructure processing unit (IPU). In some embodiments, the electronic logic circuit on the IC die may be a FPGA. In some embodiments, the IC die may comprise an application-specific integrated circuit (ASIC) to perform specialized functions. In some embodiments, the IC die may comprise a non-volatile memory or comprise a network switch.

In some embodiments, the optical transceivers may be integrated on one or more optical chiplet dies separate from the IC die and from the configurable optical switch, also integrated on a separate semiconductor die. The optical transceivers may be electrically coupled to the electronic circuitry on the IC die through package substrate metallization and/or through an embedded bridge die. The package substrate can be constructed from organic material, inorganic such as ceramic or silicon. The optical transceivers may be optically coupled to the configurable optical switch through on-package optical fibers, integrated micro-optics or by a free-space coupling embodiment. Integrated micro-optics use of silica or some other optically transparent medium to mode field couple, collimate, polarization adjust, direct or optically focus the signal as needed when transforming optical signals between die or to fiber. One or more optical paths may be supported on the optical micro-optic structure. Micro-optics maybe used in facilitating free-space optical links within the package construct through transforming the signal from the mode-field size to a collimated beam for transmission over a free-space which is then refocused by a second micro-optics lens to a second PIC die. In some embodiments, the configurable optical switch may be integrated on a single substrate with the one or more optical transceivers, and optical coupling may be through integrated optical waveguides.

In some embodiments, the one or more optical transceivers may be integrated with the electronic circuitry on the IC die or chiplet. The optical transceivers may be optically coupled to the configurable optical switch through on-package optical fibers or by other coupling means, including free-space coupling.

In some embodiments, the one or more optical transceivers may be integrated with the optical switching network on a single semiconductor die or chiplet separate from the IC die. The optical transceivers may be electrically coupled to the electronic circuitry through package substrate metallization, an embedded bridge die or by die interconnects in vertical packages. The optical transceivers may be optically coupled to the integrated switching network by on-chip integrated optical waveguides or by free-space laser coupling.

In some embodiments, the one or more optical transceivers may be integrated with the optical switching network and the electronic circuitry on a single semiconductor chip. The optical transceivers may be optically coupled to the optical switching network through on-chip integrated optical waveguides or by free-space laser coupling.

An optical die may comprise multiple optical ports, optoelectronic and photonic components such as phototransistors, photo diodes, diode lasers, light-emitting diodes, semiconductor optical amplifiers, micro-ring resonators, micro-ring and Mach-Zehnder modulators, diffraction gratings, optical switches, optical couplers, mode field expanders, grating couplers, edge-couplers, V-groove couplers, micro-lenses and integrated waveguides. Some of the optoelectronic components may be integrated into or used to formulate optical transceiver circuits. Optical transceiver circuits may interconvert optical and electrical signals. Each optical transceiver circuit may include at least one optical port and at least one electrical port.

In some embodiments, the integrated optical switching network may comprise multiple photonic and/or optoelectronic switching components arranged as a configurable network. The integrated optical switch may comprise multiple optical ports. Some ports on the integrated optical switch maybe couplable to optical transceiver ports. In some embodiments, each optical port of the optical switch may be coupled to one or more optical ribbon cables comprising one or more optical fibers. Each optical fiber within a ribbon may carry one or more optical signals to or from ports on the optical switch. Some switch ports may be coupled to an optical interface (e.g., an optical connector) comprising exo-package optical ports for coupling incoming and outgoing optical signals to and from optical devices external OSMCP. Exo-package optical connectors maybe in the form of fiberoptic cable fly-leads emanating from package where pluggable optical connectors are fitted to said fly-leads.

In some implementation embodiments, the disclosed optical switching multichip package (OSMCP) or multiple instantiations of the OSMCP may be employed as part of a compute node, such as in a data center or a telecom network. Some of the instantiations may be peripheral to a controller OSMCP instantiation. Optical I/O signals may be carried by one or more optical fibers coupled to a single package or between the multiple OSMCP packages on a single platform or between separate platforms. Multiple optical fibers may be bundled into optical ribbon cables and coupled to an external optical network an optically connected peripheral devices.

As an example, a compute node within an optically connected data center, for example, may receive an updated workload up to several times a day. The workload may be assigned as software code to a particular compute node by a human-machine interface remotely or local to the OSMPC processor in a datacenter or by autonomously through a processor workload assignment algorithm run in an OSPMPC embedded processor or in a remote processor. Once the workload assignment is received by the compute node, a controller processor (e.g., the CPU) may execute an algorithm that determines bandwidth allocation between itself and peripheral devices and/or between peripheral devices. The peripheral devices may be separate instantiations of the disclosed IC package on the same platform or on separate platforms (e.g., on the same rack), optically coupled to each other and to the main CPU through optical fiber bundles or ribbon cable.

As a fiber shuffler may be included to re-route optical signals distributed on optical cables (e.g., optical ribbons comprising multiple optical fibers). A fiber ribbon coupled to a laser array may be connected to input ports of a fiber shuffler along with fiber ribbons from an optical transmitter (TX) array and from an optical receiver (RX) array. The laser, TX and RX channels may be segregated into separate fiber ribbons that may be carried on the platform to which the optical IC package is attached, or on separate platforms. The shuffler may split channels and re-assign laser, TX and RX channels (TX and RX signal moving in opposite directions) into output fiber bundles (e.g., fiber ribbons) where each bundle comprises one fiber assigned to a laser channel, a second fiber assigned a TX channel and a third fiber assigned to a RX channel.

Multiple output fiber bundles, each having a laser, TX and RX channel, may be coupled to an optical IC package through an optical interface. This grouping order may be required by one or more of the optical transceivers, whereby at least some optical ports on the optical transceivers require three channels comprising for example the laser, TX and RX channels. In two interconnecting devices through a fiber ribbon, the TX port assigned fiber at one device needs to be connected to the RX port at the other device in order to establish a communication link. If both devices are using a common fiber array configuration then this fiber at a package level this, shuffling has to be performed in the interconnecting fiber ribbon. Homogenous configuration of computing devices, racks and PCBs is preferred so for example connecting two compute nodes, where one side of the interface has to shuffle the array rather than none or both, a reconfigurable switch is preferred.

The fiber assignments made by the shuffler may be fixed, and cannot be readily changed without manual intervention. A rigid fiber assignment may be a disadvantage in modern optical MCPs. Fiber assignments may need to change according to bandwidth needs, hardware and software upgrades, failures within optical routes, etc. For example, bandwidth demand may fluctuate with computational workload, necessitating re-assignment of resources to other on-package devices for more optimal use of processing resources at times of high bandwidth demand, or reserving resources when demand is low to save energy. Resource use may be unoptimized in a fixed channel assignment configuration, and may be more costly in terms of energetic consumption and reduced bandwidth.

Reconfiguration of the optical network or optical connections may be necessary to respond to changes in compute node workload. Advantageously, the integrated optical switch may be dynamically reconfigured by the on-package logic circuitry to re-route optical signals to the one or more optical transceivers. The OSMCP disclosed herein may provide a means to optimally support the workload running on the compute node by re-configuration of the available optical I/O to minimize the bandwidth bottle neck to a particular "off-chip" resource. Advantageously, the total available bandwidth may be connected in such a way so the platform is optimized for the workload running.

For example, some workloads require more access to memory resources, thus more bandwidth to memory. In other examples, a CPU may need to offload computational workload to a graphics processing unit (GPU), requiring more bandwidth to the GPU. In a further example, some workloads may require packet switching to external networks, requiring more bandwidth to a rack switch.

Another advantage of the disclosed package-integrated optical switch is the ability to reroute fibers from any failed or malfunctioning optical channels (e.g., ports, optoelectronic or fiber components from the optical network that are malfunctioning or not operating). For example, if a port transceiver on an optical chiplet fails and is detected as a defective unit, the on-package optical switch may re-assign the fiber to an unused port that may be available on the same optical chiplet or another co-packaged optical chiplet. To effectuate the switching, a co-packaged processor or an off-chip processor may send configuration information to the on-package optical switch to switch a fiber from the defective port to a redundant port on the optical chiplet that is available. Total bandwidth supportable by a OSMCP may be related to the number of optical fiber connections to the optical package. To accommodate changes in bandwidth demand in a particular optical connection (optical connections may comprise multiple fibers, each fiber providing an optical fiber channel), the number of optical fiber channels between two or more instantiations of the optical IC package may be changed by switching in more optical fibers between two or more packages or switching out optical fibers from one package and routing them to another package, or by simply deactivating them (e.g., turning them off, making them go dark).

The configurable optical switch may be managed by the processor or a FPGA co-packaged with the optical switch, or by logic located off-package elsewhere in the network, including in other instantiations on the same platform. For example, within a compute node, a controller OSMPC may control the switches on peripheral OSMCPs. Control software or firmware comprising machine-readable configuration information (e.g. comprising machine-readable processor instructions or programming for a FPGA) may be stored in on-package or off-package memory, such as an erasable programable read-only memory (e.g., an EPROM or EEPROM) or in non-volatile memory (NVM). The control software or firmware may be invoked as dictated by workload requirements. In some embodiments the on-package switch may have an integrated on-chip NVM or EPROM and logic circuitry (e.g., a microprocessor).

In another example, faults detected along optical paths, for example, failures in optical ports or fibers themselves, may slow or hinder data transfer along the optical path. Advantageously, the disclosed integrated optical switch on the disclosed optical IC package may enable re-assignment of optical channels. As an example, signals assigned to a specific set of fibers coupled to a mal-functioning communication port on an optical transceiver chiplet may be reassigned to a set of fibers coupled to another port on the same optical transceiver chiplet. In some embodiments, the optical switch may map redundant channels to extra ports on the optical transceivers, so that an active channel coupled to one port on an optical transceiver chiplet may be re-routed to a different port on the optical transceiver chiplet, or to a different optical transceiver chiplet.

In this disclosure, it is understood that the terms "over", "under", "above", "below", "upper", "lower", "top" and "bottom" have the usual structural meanings, referring to relative vertical positions within structural embodiments and to their immediate environment as viewed within the associated figures. Similarly, the terms "left", "right", "side" and "sideways" have the usual structural meanings, referring to relative horizontal positions within structural embodiments and within their immediate environment as viewed within the associated figures.

The terms "substantial" or "substantially" are used within this disclosure to mean "the greater part of", "mostly" or "mostly to fully". For example, "substantially" may qualitatively indicate a measure within 10% of a quantifiable attribute, with the possibility that the measure may range from 90% to 100% of the quantifiable attribute.

Views labeled "cross-sectional", "profile", "plan", and "isometric" correspond to orthogonal planes within a cartesian coordinate system. Thus, cross-sectional and profile views are taken in the x-z plane, plan views are taken in the x-y plane, and isometric views are taken in a 3-dimensional cartesian coordinate system (x-y-z). Where appropriate, drawings are labeled with axes to indicate the orientation of the figure.

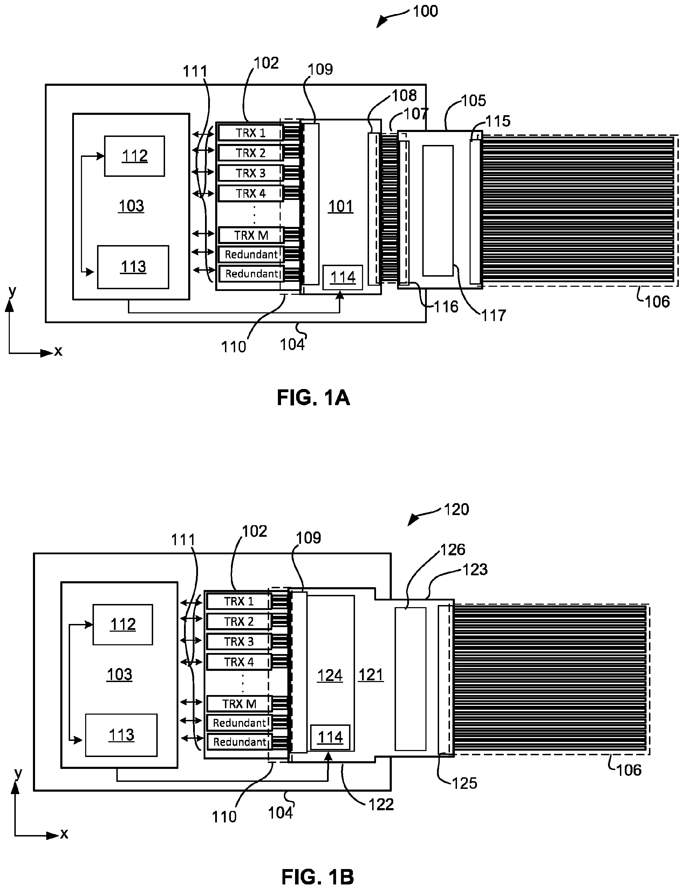

**Fig. 1A** illustrates a plan view in the x-y plane of optical switching multichip package (OSMCP) 100, comprising optical switch chip, according to some embodiments of the disclosure.

Optoelectronic package 100 comprises optical switch 101, optical transceiver chiplet 102 and electronic IC die 103, any or all of which may be electronically coupled to substrate 104. Optical transceiver chiplet 102 may be optically coupled to optical switch die 101 and electrically coupled to electronic IC die 103. Optical switch die 101 may comprise oat least one configurable optical switch or optical switch network. In this disclosure, an optical switch network may comprise integrated micro-optoelectronic switching components that are heterogeneously or monolithically integrated onto a semiconductor die, such as configurable optical switch die 101. Micro-electrooptical components may include, but are not limited to, polymer switches, Mach-Zehnder interferometers, micro-ring resonators, semiconductor optical amplifiers, and micro-electromechanical system (MEMS) mirrors. Optical switch 101 may comprise semiconductor materials such as, but not limited to, silicon, germanium, amorphous silicon, silicon nitride, gallium arsenide, gallium nitride, and indium phosphide.

Configurable optical switch function implies a switch position can be directly or indirectly electrically manipulated for example to substantially disallow an optical signal present on a port of configurable optical switch 101 substantially not pass to at least one other port on the configurable optical switch 101 or/and allow an optical signal present on a port of the optical switch network on configurable optical switch 101 to substantially pass to at least one other port on the configurable optical switch 101.

Optical connector 105 may comprise edge port interface 115 comprising exo-package optical ports for connecting a fiber array unit (FAU), for example, connecting multiple external optical fibers 106 to OSMPC package 100. For example, optical connector 105 may comprise edge port interface 115 for edge-coupling optical fibers 106 (e.g., on a ribbon terminated by a V-groove FAU ferrule). In some embodiments, optical connector 105 comprises grating coupler interface 117 for vertical FAU coupling and edge port interface 115 for lateral FAU coupling. A vertically-coupling FAU may have a 90° bend of optical fibers 106 at the FAU ferrule. Advantageously, inclusion of both grating coupler 117 and edge coupler 115 on optical connector 105 enable vertical and horizontal FAU coupling to OSMCP 100 for thermal and spatial configuration optimization of a platform comprising one or more OSMCP packages.

In some embodiments, bridging waveguides 107 extend between intra-package optical ports 116 (shown as a block) on optical connector 105 and intra-package optical ports 108 on optical switch 101. In some embodiments, bridging waveguides 107 may comprise discrete optical fibers or integrated optical waveguides (e.g., on a separate chiplet), whereby optical ports 108 may be edge coupling ports (not shown) for edge-coupling to ends of optical fibers 106. In some embodiments, intra-package port interface 108 may comprise integrated lasers, enabling free-space optical coupling between optical connector 105 and optical switch 101.

The number of optical fibers 106 connected to OSMCP 100 may depend on number of optical dies 102. For example, a fiber shuffler may receive a first fiber ribbon carrying M data streams transmitted by a transmitting array located elsewhere in the network to receivers (RX) on optical package 100. The fiber shuffler may also receive a second fiber ribbon carrying M data streams transmitted by a transmitter array on the optoelectronic package to a receiver array or dispersed receivers located elsewhere in the network (TX). The fiber shuffler may optionally receive a third fiber carrying M laser source light signals. In some embodiments the laser sources optionally may be integrated on the OSMCP for use by the optical transceiver circuits, each laser source is modulated by the data-stream transmitted. In other embodiments the laser source is external to the OSMCP and is input through the FAU 105. Laser performance can often be sensitive to thermal transients as often experienced by logic IC when undergoing a change in workload, the power transient would cause a thermal transient which could give rise to sub-optimal laser performance. For this reason, many co-packaged optical and logic device functions have the laser source external to the package. In an example embodiment, a laser array may output multiple laser outputs that may be input the OSMCP. The laser array can also be co-located on the same platform with the optoelectronic package or elsewhere in the network. In general, the fiber shuffler may receive any number N fiber ribbons carrying different optical signals.

The fiber shuffler may sort and interleave signals carried by individual fibers in the first, second and third fiber ribbons on a fourth fiber ribbon having NxM fibers in a predetermined order to match the port configuration of optical dies within the package. Thus, there may be M transceiver port channels, each transceiver port channel comprising N signal input/output (I/O) each I/O signal is carried on a separate fiber, whereby NxM fibers may be coupled to the OSMCP (e.g., an optical transceiver chiplet). In some embodiments, OSMCP 100 comprises K optical dies, and may accept up to KxMxN optical connections. Referring to the example, N=3. Each port on the optical die (or dies) may be configured to couple to three optical fibers, for example, whereby a first fiber may carry a TX signal, a second fiber may carry an RX signal, and a third fiber may carry a laser signal. Each port on the optical chiplet may be coupled to a different channel having the same three signal types.

In conventional optical networks or optically connected components, a fiber shuffler may be needed for each optical package on a single platform, or one fiber shuffler may accommodate two or more optical packages, each package having a divergent port configuration. A fiber shuffler may be a large device comprising a number (e.g., NxM) of discrete optical fibers that are "hard wired" to a specific order of incoming and outgoing signals. Conventional fiber shufflers may be bulky devices having a relatively large footprint. Platforms comprising a fiber shuffler may require double or triple the area than would be required if the fiber shuffler were not present. In some implementations, a fiber shuffler may be carried on a separate platform, taking extra space within a rack, for example.

Advantageously, optical switch 101 may perform the sorting and interleaving function of a fiber shuffler, eliminating the need to include a discrete fiber shuffler unit within an optical communications network. For example, optical fibers 106 may be in any order with regards to the type of optical I/O signals carried by the individual fibers 106. Optical switch 101 may map individual optical fibers 106 to individual bridging waveguides 107.

Optical switch 101 may comprise multiple intra-package optical ports within a first interface 108 (shown as a block between optical switch 101 and optical connector 105) to which bridging optical fibers 107 may be coupled. Individual intra-package optical ports (not shown) of interface 108 may comprise an integrated waveguide that may be edge-coupled to an individual incoming fiber of the ensemble of optical fibers 106. Intra-package optical ports within optical interface 108 may couple optical I/O signals to or from a system of interconnected internal waveguides that may be part of an internal switching network (not shown) within optical switch 101. In the illustrated embodiment, interface 108 may comprise MxN or more optical ports.

Optical switch 101 may comprise a second interface 109 (shown as a block opposite interface 108) between optical switch 101 and optical transceiver die 102. Interface 109 may comprise one or more intra-package optical ports (not shown). Optical switch 101 may be operably configured to map individual fibers 106 to individual fibers 110 (or in some embodiments, optical fibers 110 may also be integrated waveguides, free-space or micro-optical links or abutted coupling links) extending between interface 109 of optical switch 101 and optical transceiver die 102. In some embodiments, individual fibers 110 may be substituted by integrated optical waveguides or by integrated diode lasers (not shown). Optical switch 101 may shuffle the order of optical fibers 106 to accommodate a particular order of signal I/O required by optical transceiver die 102. For example, optical transceiver die 102 may comprise ports to couple to optical fibers or free-space or micro optic links or abutted coupling links 110 (labeled TRX 1 through TRX M) to one or more I/O and/or laser signals for each port. In the illustrated embodiment, the signals may be carried by optical fibers (or free-space, micro-optic or abutted coupling links) 110. Ports 111 may couple any number 1 through N electrical signals that may couple logic IC die 103 to optical die 102. It will also be understood that interface 109 may comprise any number of ports.

In some embodiments, optical transceiver chiplet 102 may comprise M+R number of optical transceivers 111, whereby R corresponds to the number of dormant or unused optical transceivers. Such transceivers are labeled "redundant" in the figure. In some embodiments, R redundant transceivers 111 may be available for expansion of optical connections to optical package 100, and also for re-routing signals coupled to a defective or malfunctioning optical transceiver 111 (e.g., an optical transceiver 111 having a degradation of operational performance) to a redundant optical transceiver 111 that is functional.

As noted above, optical transceiver chiplet 102 may be electrically coupled to IC die 103, as indicated by the double-headed arrows between optical transceiver chiplet 102 and IC die 103. In some embodiments, IC die 103 may comprise logic circuitry, whereby, for example, the logic circuitry may be comprised by a microprocessor or a FPGA. Transceiver chiplet 102 may interconvert optical signals to electronic signals and vice-versa. For example, incoming (e.g., RX) optical signal data streams received at ports 111 of optical transceiver chiplet 102 may be converted to electronic data signals and output to IC die 103. Computational functions may be performed on the received data by logic on IC die 103, whereby IC die 103 may output processed electronic data to optical transceiver chiplet 102. Conversion of the electronic data to optical data signals by be performed by optical transceivers on optical transceiver chiplet 102, and output to ports 111 as TX signals. As an example, the TX data may be split into several channels, for example, up to M channels, to maximize signal bandwidth. For increasing signal bandwidth, optical data signals may also be split into streams of optical signals having different wavelengths for wavelength division multiplexing (WDM) or spatial division multiplexing (SDM) of optical signals, whereby several optical data streams may be propagated on the same fiber with no crosstalk.

IC die 103 may also comprise software, firmware or configuration logic 112 that may be employed to manage optical switch 101. For example, changes in the order, signals carried by and/or number of optical fibers 106 may require optical switch 101 to remap ports on interface 109 between optical switch 101 exo-package ports operably coupled to individual fibers 106 as present at interface 108 between optical switch 101 and optical connector 105. IC die 103 may have a firmware or software configuration that is present in memory 113 coupled to logic circuity 112 (indicted by double-headed arrow). IC die 103 may be electrically coupled to optical switch 101 through metallization on substrate 104 or through an embedded bridge die, In some embodiments, an intermediary IC die (not shown) may be used to translate the signals of IC die 103 to be compatible with configurable optical switch 101. Optical switch 101 may comprise electronic logic circuitry 114 to receive configuration information from logic circuitry 112. The firmware or software may comprise machine-readable instructions executable by logic circuity 112 that activate logic circuitry 114 to switch routing within the optical switching network of optical switch 101.

At a system level, multiple optical packages 100 may be optically and electronically coupled together on a single platform or on multiple platforms. Optimization of performance may require bandwidth allocation between packages. Examples are described below.

**Fig. 1B** illustrates a plan view in the x-y plane of OSMCP 120, according to some embodiments of the disclosure.

The above description of OSMCP 100 may substantially apply to OSMCP 120, with the exception that OSMCP 120 comprises integrated optical switch/connector 121. Integrated optical switch/connector 121 comprises an optical switch portion 122 and an optical connector portion 123. Optical switch/connector 121 may comprise a semiconductor substrate (e.g., silicon, gallium arsenide, silicon/germanium) and/or an insulator substrate (e.g. silicon dioxide, silicon nitride, silicon carbide, gallium nitride). Integrated waveguides (not shown) extending between optical switch portion 122 and optical connector portion 123 may optically couple optical fibers 106 to internal switching network 124. Optical switch/connector 121 may comprise exo-package optical port interface 125 to which optical fibers 106 may be edge-coupled. In some embodiments, Optical switch/connector 121 comprises exo-package grating coupler interface 126 for vertical coupling of a FAU to OSMCP 100 as described above.

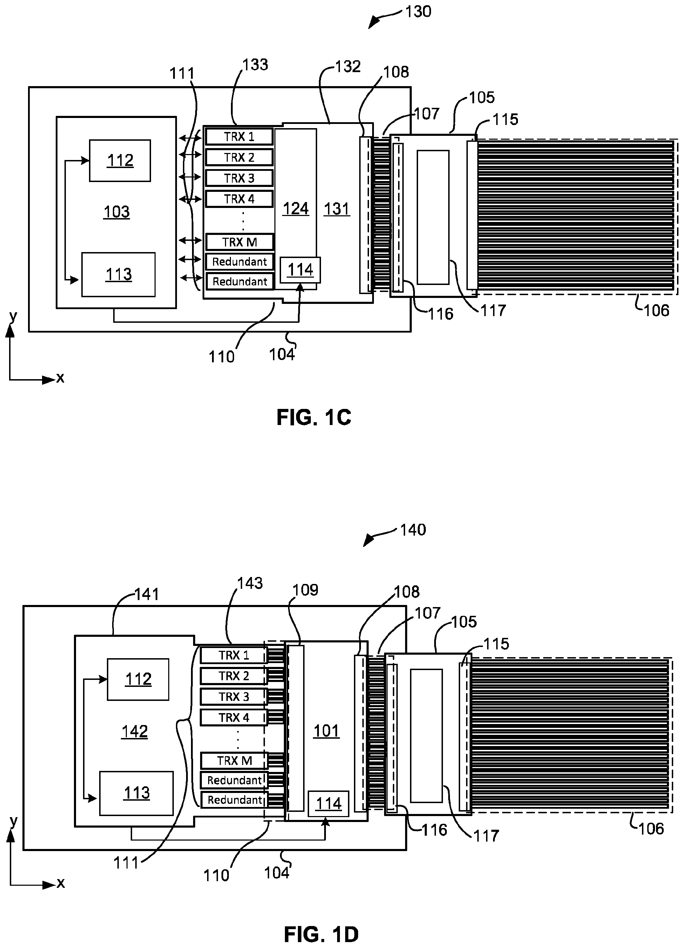

**Fig. 1C** illustrates a plan view in the x-y plane of OSMCP 130, according to some embodiments of the disclosure.

The above description of OSMCP 100 may substantially apply to OSMCP 130, with the exception that OSMCP 130 comprises optical switch/transceiver die 131 having an integrated optical transceiver portion 132 and an optical switch portion 133 on the same die 131. Optical switch/transceiver die 131 may comprise a semiconductor and/or insulator substrate as described above. Integrated waveguides (not shown) may couple the internal switching network 124 in optical switch portion 132 to optical transceiver portion 133.

Optical connector 105, comprising exo-package optical port interface 115 and exo-package grating coupler interface 117, may be coupled to optical/switch/transceiver die 131 through optical waveguides 107. In some embodiments, optical waveguides 107 may comprise discrete optical fibers, integrated optical waveguides (e.g., on a separate chiplet, not shown) or free-space laser coupling.

**Fig. 1D** illustrates a plan view in the x-y plane of OSMCP 140, according to some embodiments of the disclosure.

The above description of OSMCP 100 may substantially apply to OSMCP 140, with the exception that OSMCP 140 comprises processor/optical transceiver die 141 having a processor portion 142 and an optical portion 143. Optical portion 143 may comprise optical transceivers integrated with logic circuitry 112. Processor/optical transceiver die 141 may optionally comprise a memory 113. Processor/optical transceiver die 141 may comprise a semiconductor and/or insulator substrate as described above. Processor portion 142 and optical portion 143 may be coupled electronically through metallization within processor/optical transceiver die 141. Optical portion 143 may be coupled to optical switch 101 through optical fibers, integrated waveguides or free-space coupling 110 coupled to optical ports 111 as described for multichip optical packages 100 and 120. Integrated waveguides (not shown) may couple the internal switching network 124 in optical switch portion 132 to optical transceiver portion 133. In some embodiments, optical switch 101 may be integrated with optical portion 143.

Optical connector 105, comprising exo-package optical port interface 115 and exo-package grating coupler interface 117, may be coupled to optical/switch 101 through optical waveguides 107 as described above.

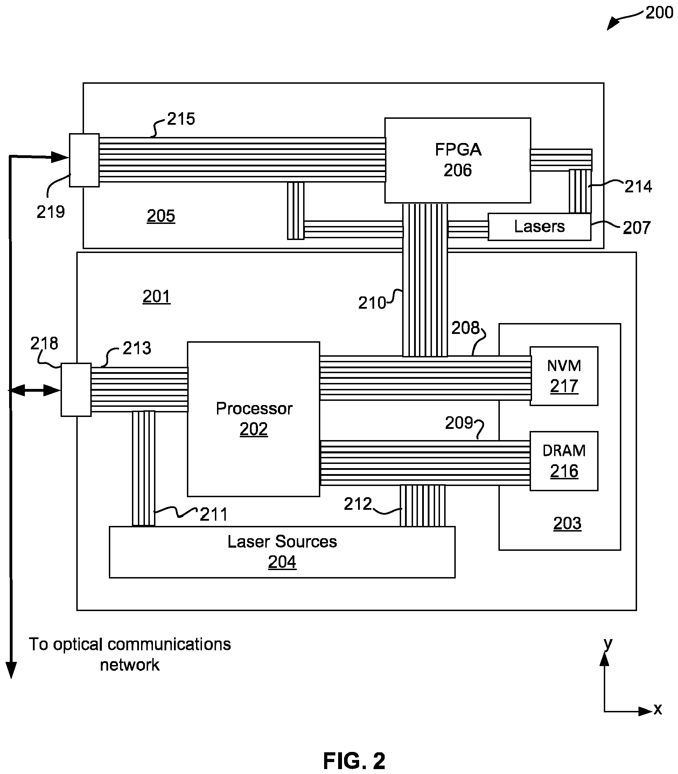

**Fig. 2** illustrates an exemplary platform 200 comprising multiple instantiations of an OSMCP (e.g., any of OSMCPs 100, 120,130 and/or 140) in optical communication, according to some embodiments of the disclosure.

Platform 200 may comprise a computer node card (e.g., PCB) or server rack card 201 comprising the OSMCP (e.g., OSMCP 100) instantiated as a processing unit 202, such as but not limited to, a CPU. GPU. IPU, XPU or any combined processing unit, a unified memory architecture block 203 and an optional laser source 204. Platform 200 may optionally comprise accelerator card 205, comprising the disclosed OSMCP instantiated as FPGA 205 and optionally as secondary laser source 207.

Processor 202 may be a controller device, whereas unified memory architecture module 203, laser source 204, FPGA 206 and secondary laser source 207 may be peripheral devices subordinate to processor 202. Processor 202 is optically coupled to the afore-mentioned peripheral devices by optical fiber ribbons 208, 209, 210, 211, 212, 213, 214 and 215.

Processor 202 may control bandwidth allocation to and/or between any or all of the peripheral devices 203-207 according to workload assignment to the compute node platform. In some embodiments, processor 202 may manage configuration of the optical switches (e.g., optical switch 101) within each multichip optical package instantiation that may be embodied in some or all of the peripheral devices 208-215, according to one or more protocols that may be contained within executable software and/or firmware code stored within memory within processor 202 or contained within dynamic random-access memory (DRAM) 216 or non-volatile memory (NVM) 218. In some embodiments, bandwidth management protocol software may be stored off-platform on a hard disk drive or solid-state drive located elsewhere in the optical communications network, which may be accessible through off-platform optical connections through card edge connectors 218 and 219.

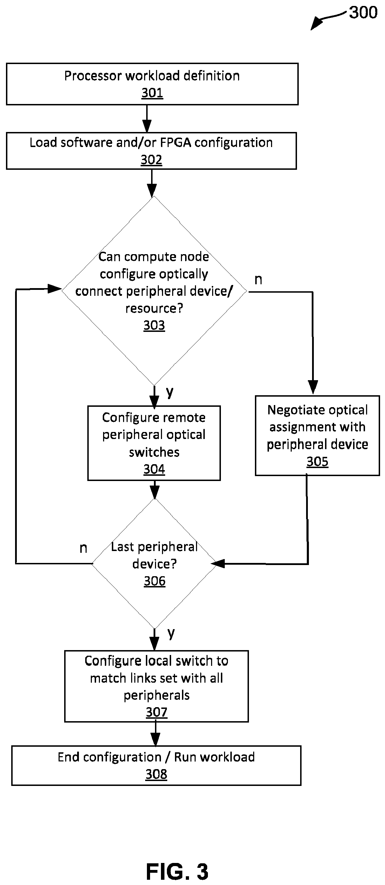

**Fig. 3** illustrates a switching protocol flow chart for bandwidth management within a compute node comprising a controller OSMCP, according to some embodiments of the disclosure.

In block 301 of switching protocol flow chart 300, a workload is defined for the compute node within an optical communication network (e.g., on platform 200) within a data center or a telecom network, for example, whereby the workload is defined as a task that a compute node platform (e.g., platform 200) is assigned. The workload may be managed by the processor (e.g., processor 202, Fig. 2) that may be a controller device on the platform that may embody the compute node. The workload may be defined and assigned to the processor by an off-platform node elsewhere in the network through a higher-level software protocol through a processor workload assignment algorithm run in OSMPC embedded processor or in a remote processor or through a human-machine interface.

In block 302, software and/or firmware embodying the workload may be dedicated code or art of a larger program that is charged into a memory location to which the processor has access. In some embodiments, an FPGA configuration image may be downloaded for a gate configuration needed for executing the workload tasks. For example, software may be copied into a memory on board the processor (e.g., memory 113, **Figs. 1A-1D****),** or within a unified memory architecture on the compute node (e.g., in NVM 217 or DRAM 218 on unified memory architecture 203).

Optionally, a peripheral logic unit such as a dedicated embedded microprocessor or a FPGA (e.g., FPGA 206) may have firmware updates that comprise executable machine instructions or logic configurations for some computational duties that may include bandwidth management between itself and subordinate devices, or between subordinate devices.

Once charged with the workload, the controller may first determine optical signal bandwidth requirements needed to execute the workload by the compute node and which peripheral devices may need to be invoked. It may need to determine with which peripheral devices within the compute node it may have access for configuration of the device's configurable optical switch. In block 303, a polling sequence may be initiated for the controller to poll each device to determine whether or not it has direct access to the configure optical switch.

If the controller has access to the optical switch on board the peripheral device, the flow may move to block 304. In block 304, the controller may send a command directly to logic on the optical switch (e.g., logic circuitry 114) to configure its optical switch according to the bandwidth allocation it has determined for the peripheral device.

For example, for a particular workload, the peripheral device may not require access to all of the optical fibers connected to it (e.g., optical fibers 106). The optical switch may be reconfigured by the controller to deactivate certain switch ports (e.g., on connector interface 108), allowing those ports to go dark. The controller may subsequently access a second peripheral device that may be using a portion of its optical connections for a previous workload. In the new workload, the second peripheral device may be needed more often or at a higher capacity than in the previous workload.

The controller may command the configurable optical switch of the second peripheral device to activate more connections than were previously active to accommodate bandwidth required for computational tasks that the second peripheral may need to take on, for example.

Referring again to decision block 303, if the controller has no direct access to a peripheral's optical switch, then the logic flow may move to block 305. The controller may negotiate with the peripheral for optical numbers of connections. Negotiation may include having a request sent to the controller by the peripheral for a specific number of optical connections to the peripheral. The controller may re-assess assignments to other peripherals, and determine if the request can be granted to the peripheral by modifying some of the assignments to other peripherals. If the request is granted, then the local optical switch within the peripheral may reconfigured by the local processor, FPGA or other logic circuitry within the peripheral.

Peripherals may be serially polled until the last peripheral is polled. Before reaching the last peripheral, the flow may return to the first decision block 303. The controller may continue to poll each peripheral until the last peripheral is polled. After polling is completed, the logic flow may move to block 307. At block 307, after all of the configurable optical switches within the peripheral devices have been re-configured either by the controller directly or by the peripheral device itself, the local optical switch within the controller may be updated to match the optical links to all of the peripherals in the compute node.

At block 308, the configuration may terminate and the workload may be initiated.

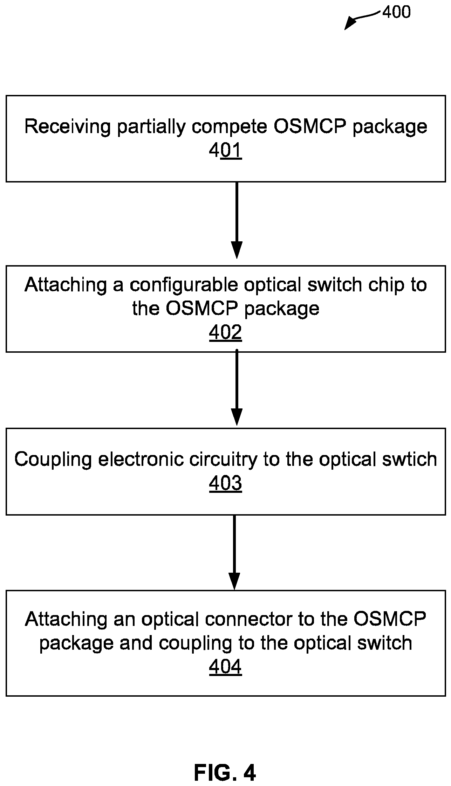

**Fig. 4** illustrates a process flow chart 400 for a method of fabrication of an OSMCP, according to some embodiments of the disclosure.

At operation 401, a partially complete OSMCP package is received at a partially complete stage of fabrication into a process for integration of a configurable optical switch into the package. The partially complete package comprises a package substrate and may include some semiconductor IC chips attached to the substrate.

At operations 402 and 403, a configurable optical switch is added to the package. The optical switch (e.g., optical switch 101) comprises an optical switching network as described above, integrated onto a semiconductor die substrate. The optical switch die may be attached to the substrate directly and electrically coupled thereto, or it may be attached to another die in a vertical stack. Optical coupling to optical transceivers may be performed by attachment of optical fibers between the optical switch die and a separate optical die comprising the optical transceivers. In some embodiments, the optical switch die may comprise integrated optical transceivers optically coupled to the optical switching network through integrated waveguides.

At operation 404, an optical connector (e.g., connector 105) is attached to the package. The optical connector may be an edge connector for receiving a fiber array unit (FAU) ferrule, for example, having V-grooves for holding ends of optical fiber array and edge-coupling to fibers of a fiber ribbon at the edge of the package. In some embodiments, the optical coupler is a grating coupler on the top of the package for vertical coupling of a FAU to the package.

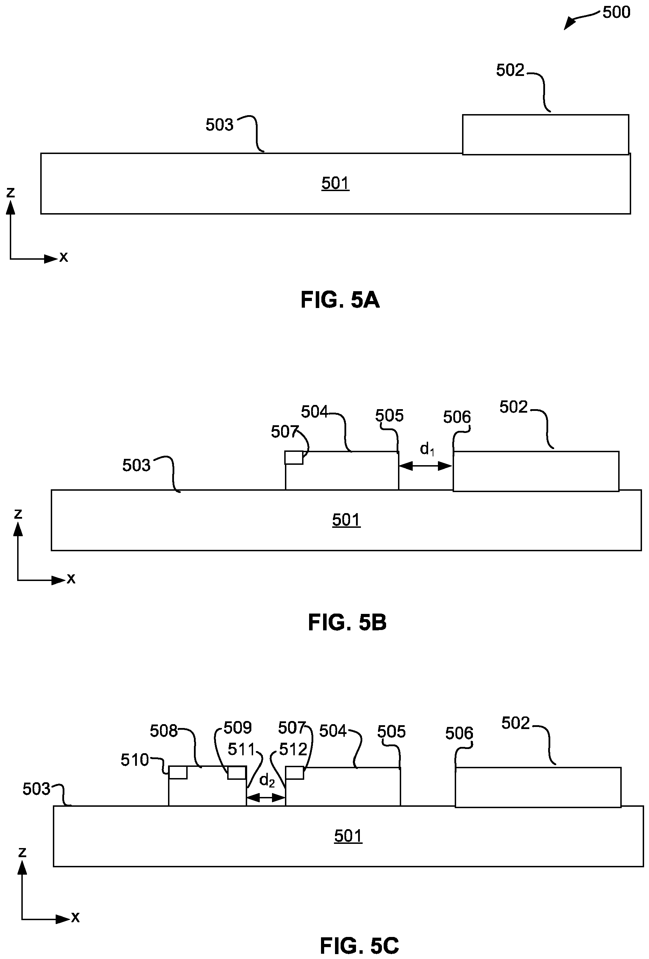

**Figs. 5A-5E** illustrate cross-sectional views in the x-z plane of key stages of the method of fabrication of a OSMCP, according to some embodiments of the disclosure.

In **Fig. 5A****,** OSMCP package 500 is received in a partially complete stage of fabrication, as noted above. Package 500 comprises substrate 501 and IC die 502 electrically coupled to substrate 501. Substrate 501 comprises a dielectric material comprising organic materials such as, but not limited to, polyimides, epoxy-phenol, benzocyclobutene, and polybenzoxazole resins. Substrate 501 may comprise dielectric films comprising the afore-mentioned materials in a layered build-up structure. Substrate 501 may comprise metallization on and buried within the dielectric material for electronic communication between multiple dies.

OSMCP package 500 may be a multi-chip package whereby all dies are horizontally integrated on surface 503 of substrate 501, or a three-dimensional package whereby some or all dies are vertically stacked. Although shown attached directly to substrate 501, IC die 502 may be stacked on a lower die (not shown) in a vertical integration configuration. IC die 502 may comprise only integrated electronic circuitry and/or photonic and optoelectronic circuits and components. For example, IC die 502 may comprise electronic logic circuitry (e.g., IC die 103 comprising electronic logic circuit 112). In some embodiments, IC die 502 may be computational chip such as a microprocessor or a FPGA. In some embodiments, IC die 502 may be an ASIC, having a non-computational function.

In some embodiments, IC die 502 may comprise integrated optical transceivers (not shown) that may comprise integrated diode lasers, phototransistors, photodiodes and/or optical waveguides. As described above, integrated optical transceivers may be electrically coupled to integrated electronic circuitry on IC die 502.

In **Fig. 5B****,** optical chiplet 504 is coupled to substrate 501. Optical chiplet 504 may comprise one or more integrated optical transceivers as described above. Optical transceivers may be coupled to optical ports 505 by integrated waveguides. While optical chiplet 504 is shown attached to surface 503 of substrate 501, optical chiplet 504 may be solder-bonded to interconnects on surface 503, or to interconnects on a lower die within a die stack (not shown) electrically coupled to substrate 501. Electrical connections may provide power and electrical communication interconnections to optical chiplet 504.

Optical chiplet 504 may be immediately adjacent to IC die 502. For example, a distance *d₁* between sidewall 505 of optical chiplet 504 and sidewall 506 of IC die 502 may be less than 2 mm. Optical chiplet 504 may electronically communicate with electronic circuitry on IC die 502. For example, optical transceivers on optical chiplet 504 may be coupled to electronic circuitry on IC die 502 through substrate 501. In some embodiments, a bridge die within substrate 501 may couple electrical or optical signals to optical chiplet 504 to IC die 502.

Optical switch 504 may comprise one or more optical ports 507 for optical communication between optical switch 504 and other devices on OSMPC 500.

In **Fig. 5C****,** configurable optical switch 508 is coupled to substrate 501 by direct attachment or indirect attachment. Optical switch 508 may be directly attached to substrate 501, for example, by solder-bonding, or may be attached to another die in a vertical stack. The description of optical switch 101 above may be substantially applicable to optical switch 508. Optical switch may be electrically coupled to IC die 502 through substrate 501. Optical switch 508 may comprise optical ports 509 and 510, corresponding to optical interfaces 109 and 108 in **Fig. 1A****,** respectively. For example, as within interface 109 in **Fig. 1A****.** Optical switch 508 may be immediately adjacent to optical chiplet 504. For example, a distance *d*₂ between sidewall 511 of optical switch 508 and sidewall 512 of optical chiplet 504 may be 2mm or less for facilitating optical coupling.

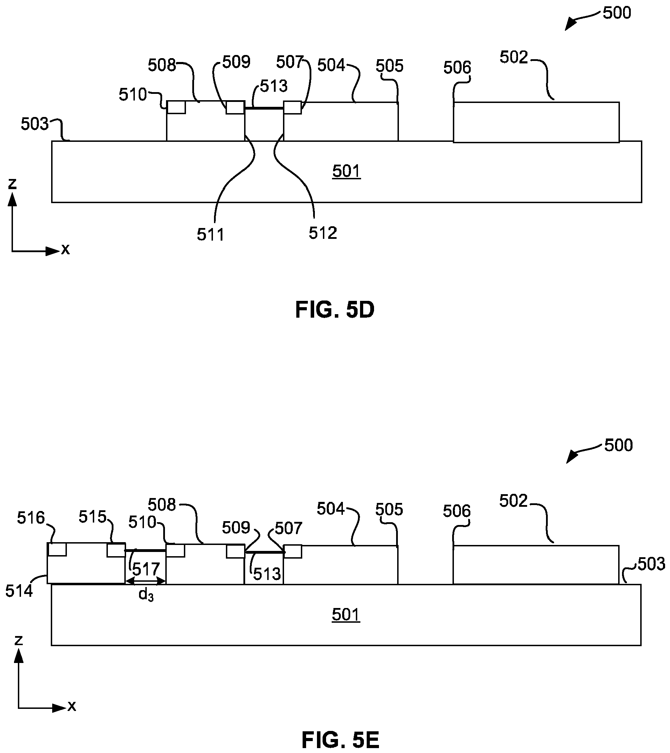

In **Fig. 5D****,** optical fibers 513 are attached to ports 507 on optical chiplet 504 and ports 509 on optical switch 508, spanning the distance *d*₂ to couple optical transceivers on optical chiplet 504 to the integrated optical switching network on optical switch 508. Optical fibers 513 may be a fiber ribbon or multiple fiber ribbons. Optical fibers 513 may be individual fibers. Optical fibers 513 may be attached by a precision pick-and-place tool. While optical fiber coupling is described, it is understood that in some embodiments, optical switch 508 may be coupled to optical chiplet 504 by free-space laser coupling, replacing optical fibers 513.

In **Fig. 5E****,** optical connector 514 is attached to package substrate 501. While optical connector 514 is an edge connector in the illustrated embodiment, optical connector 514 may be a grating connector for top surface coupling of fiber array unit connectors for fiber ribbons. Optical connector may comprise ports 515 and 516. Optical fibers 517 may be coupled to ports 515 on optical connector 514 and ports 510 on optical switch (e.g., connection on interface 108). Optical fiber 517 may span a distance *d*₃ between sidewall 517 of optical connector 514 and sidewall 518 of optical switch 508. Distance *d*₃ may be similar to distance *d*₂. Ports 516 on optical connector may be exo-package ports that are arranged horizontally for edge connection of fiber ribbons.

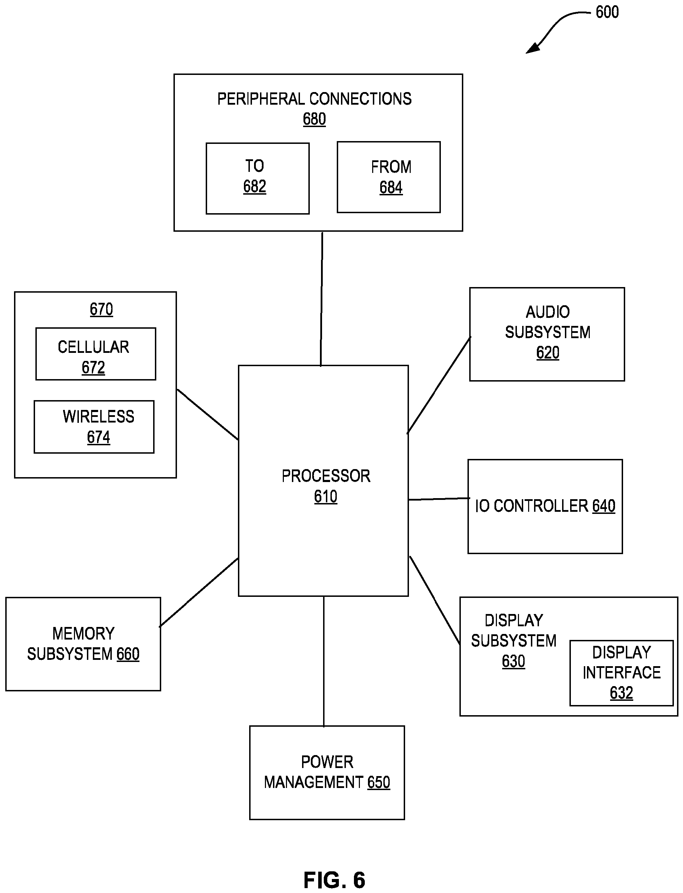

**Fig. 6** illustrates a block diagram of computing device 600 as part of a system-on-chip (SoC) package in an implementation comprising any of OSMCPs 100, 120, 130 or 140, according to some embodiments of the disclosure.

According to some embodiments, computing device 600 represents a server, a compute node within an optical network, a desktop workstation, or a mobile workstation, such as, but not limited to, a laptop computer, a computing tablet, a mobile phone or smart-phone, a wireless-enabled e-reader, or other wireless mobile device. Multichip IC packages, such as, but not limited to, a single- or multi-core microprocessor (e.g., representing a central processing unit), logic dies, RF dies, high power dies, memory dies, antenna dies, comprises a packages substrate having, for example.

In some embodiments, computing device has wireless connectivity (e.g., Bluetooth, WiFi and 5G network). It will be understood that certain components are shown generally, and not all components of such a device are shown in computing device 600.

The various embodiments of the present disclosure may also comprise a network interface within 670 such as a wireless interface so that a system embodiment may be incorporated into a wireless device, for example, cell phone or personal digital assistant. The wireless interface includes a millimeter wave generator and antenna array. The millimeter wave generator may be part of a monolithic microwave integrated circuit.

According to some embodiments, processor 610 represents a CPU or a GPU, and can include one or more physical devices, such as microprocessors, application processors, microcontrollers, programmable logic devices, or other processing means. Processor 610 may be coupled to a memory controller or high-speed serial I/O interface controller, as disclosed. The processing operations performed by processor 610 include the execution of an operating platform or operating system on which applications and/or device functions are executed. The processing operations include operations related to I/O (input/output) with a human user or with other devices, operations related to power management, and/or operations related to connecting the computing device 600 to another device. The processing operations may also include operations related to audio I/O and/or display I/O.

In one embodiment, computing device 600 includes audio subsystem 620, which represents hardware (e.g., audio hardware and audio circuits) and software (e.g., drivers, codecs) components associated with providing audio functions to the computing device. Audio functions can include speaker and/or headphone output, as well as microphone input. Devices for such functions can be integrated into computing device 600, or connected to the computing device 600. In one embodiment, a user interacts with the computing device 600 by providing audio commands that are received and processed by processor 610

Display subsystem 630 represents hardware (e.g., display devices) and software (e.g., drivers) components that provide a visual and/or tactile display for a user to interact with the computing device 600. Display subsystem 630 includes display interface 632 which includes the particular screen or hardware device used to provide a display to a user. In one embodiment, display interface 632 includes logic separate from processor 610 to perform at least some processing related to the display. In one embodiment, display subsystem 630 includes a touch screen (or touch pad) device that provides both output and input to a user.

I/O controller 640 represents hardware devices and software components related to interaction with a user. I/O controller 640 is operable to manage hardware that is part of audio subsystem 620 and/or display subsystem 630. Additionally, I/O controller 640 illustrates a connection point for additional devices that connect to computing device 600 through which a user might interact with the system. For example, devices that can be attached to the computing device 600 might include microphone devices, speaker or stereo systems, video systems or other display devices, keyboard or keypad devices, or other I/O devices for use with specific applications such as card readers or other devices.

As mentioned above, I/O controller 640 can interact with audio subsystem 620 and/or display subsystem 630. For example, input through a microphone or other audio device can provide input or commands for one or more applications or functions of the computing device 600. Additionally, audio output can be provided instead of, or in addition to display output. In another example, if display subsystem 630 includes a touch screen, the display device also acts as an input device, which can be at least partially managed by I/O controller 640. There can also be additional edgeons or switches on the computing device 600 to provide I/O functions managed by I/O controller 640.

In one embodiment, I/O controller 640 manages devices such as accelerometers, cameras, light sensors or other environmental sensors, or other hardware that can be included in the computing device 600. The input can be part of direct user interaction, as well as providing environmental input to the system to influence its operations (such as filtering for noise, adjusting displays for brightness detection, applying a flash for a camera, or other features).

In one embodiment, computing device 600 includes power management 650 that manages battery power usage, charging of the battery, and features related to power saving operation. Memory subsystem 660 includes memory devices for storing information in computing device 600. Memory can include nonvolatile (state does not change if power to the memory device is interrupted) and/or volatile (state is indeterminate if power to the memory device is interrupted) memory devices. Memory subsystem 660 can store application data, user data, music, photos, documents, or other data, as well as system data (whether long-term or temporary) related to the execution of the applications and functions of the computing device 600.

Elements of embodiments are also provided as a machine-readable medium (e.g., memory 660) for storing the computer-executable instructions. The machine-readable medium (e.g., memory 660) may include, but is not limited to, flash memory, optical disks, CD-ROMs, DVD ROMs, RAMs, EPROMs, EEPROMs, magnetic or optical cards, phase change memory (PCM), or other types of machine-readable media suitable for storing electronic or computer-executable instructions. For example, embodiments of the disclosure may be downloaded as a computer program (e.g., BIOS) which may be transferred from a remote computer (e.g., a server) to a requesting computer (e.g., a client) by way of data signals via a communication link (e.g., a modem or network connection).

Connectivity via network interface 670 includes hardware devices (e.g., wireless and/or wired connectors and communication hardware) and software components (e.g., drivers, protocol stacks) to enable the computing device 600 to communicate with external devices. The computing device 600 could be separate devices, such as other computing devices, wireless access points or base stations, as well as peripherals such as headsets, printers, or other devices.

Network interface 670 can include multiple different types of connectivity. To generalize, the computing device 600 is illustrated with cellular connectivity 672 and wireless connectivity 674. Cellular connectivity 672 refers generally to cellular network connectivity provided by wireless carriers, such as provided via GSM (global system for mobile communications) or variations or derivatives, CDMA (code division multiple access) or variations or derivatives, TDM (time division multiplexing) or variations or derivatives, or other cellular service standards. Wireless connectivity (or wireless interface) 674 refers to wireless connectivity that is not cellular, and can include personal area networks (such as Bluetooth, Near Field, etc.), local area networks (such as Wi-Fi), and/or wide area networks (such as WiMax), or other wireless communication.

Peripheral connections 680 include hardware interfaces and connectors, as well as software components (e.g., drivers, protocol stacks) to make peripheral connections. It will be understood that the computing device 600 could both be a peripheral device ("to" 682) to other computing devices, as well as have peripheral devices ("from" 684) connected to it. The computing device 600 commonly has a "docking" connector to connect to other computing devices for purposes such as managing (e.g., downloading and/or uploading, changing, synchronizing) content on computing device 600. Additionally, a docking connector can allow computing device 600 to connect to certain peripherals that allow the computing device 600 to control content output, for example, to audiovisual or other systems.

In addition to a proprietary docking connector or other proprietary connection hardware, the computing device 600 can make peripheral connections 680 via common or standards-based connectors. Common types can include a Universal Serial Bus (USB) connector (which can include any of a number of different hardware interfaces), DisplayPort including MiniDisplayPort (MDP), High Definition Multimedia Interface (HDMI), Firewire, or other types.

Furthermore, the particular features, structures, functions, or characteristics may be combined in any suitable manner in one or more embodiments. For example, a first embodiment may be combined with a second embodiment anywhere the particular features, structures, functions, or characteristics associated with the two embodiments are not mutually exclusive.

While the disclosure has been described in conjunction with specific embodiments thereof, many alternatives, modifications and variations of such embodiments will be apparent to those of ordinary skill in the art in light of the foregoing description. The embodiments of the disclosure are intended to embrace all such alternatives, modifications, and variations as to fall within the broad scope of the appended claims.

In addition, well known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are highly dependent upon the platform within which the present disclosure is to be implemented (i.e., such specifics should be well within purview of one skilled in the art). Where specific details (e.g., circuits) are set forth in order to describe example embodiments of the disclosure, it should be apparent to one skilled in the art that the disclosure can be practiced without, or with variation of, these specific details. The description is thus to be regarded as illustrative instead of limiting.

The following examples pertain to further embodiments. Specifics in the examples may be used anywhere in one or more embodiments. All optional features of the apparatus described herein may also be implemented with respect to a method or process.

Example 1 is an integrated circuit (IC) package, comprising an optical die comprising a configurable optical switch comprising an optical switch operably coupled to one or more optical transceivers, an optical connector comprising at least one exo-package optical port, the at least one exo-package optical port operably coupled to the configurable optical switch, wherein the configurable optical switch is to pass an optical signal on the at least one of the one or more exo-package ports to at least one of the one or more optical transceivers, and an IC die comprising electronic circuitry operably coupled to the one or more optical transceivers.

Example 2 includes all of the features of example 1, wherein the optical die is a first optical die, , wherein a second optical die comprises the one or more optical transceivers, and, wherein the one or more optical transceivers are operably coupled to the configurable optical switch.

Example 3 includes all of the features of example 2, wherein the one or more optical transceivers are optically coupled to the configurable optical switch through an at least one optical fiber, waveguide or a free-space laser coupling.

Example 4 includes all of the features of any one of examples 1 through 3, wherein the IC die is a first die comprising the one or more optical transceivers electrically coupled to the electronic circuitry and optically coupled to a first optical port on the first die, wherein a second die comprises the optical switch and a second optical port optically coupled to the optical switch, and wherein at least one optical fiber is coupled to the first optical port and to the second optical port.

Example 5 includes all of the features of any one of examples 1 through 4, wherein the configurable optical switch is monolithically integrated with at least one optical transceiver, and wherein the configurable optical switch is optically coupled to the one or more optical transceiver circuits.

Example 6 includes all of the features of any one of examples 1 through 5, wherein the configurable optical switch comprises a configurable optical switch, wherein the IC die comprises an electronic logic circuit electrically coupled to the configurable optical switch; and wherein the electronic logic circuit is to configure the configurable optical switch to pass an optical signal on the at least one of the one or more exo-package ports to at least a first intra-package optical port optically coupled to the at least one of the one or more optical transceivers.

Example 7 includes all of the features of example 6, wherein the electronic logic circuit is to configure the configurable optical switch to re-route the optical signal on the one or more exo-package ports to at least a second intra-package optical port optically coupled to the at least one of the one or more optical transceivers.

Example 8 includes all of the features of example 7, wherein a nonvolatile memory is coupled to the electronic logic circuit, the nonvolatile memory is operable to store binary data comprising switch configuration information readable by the logic circuit, and wherein the memory is programmable through a connection to an external logic device.

Example 9 includes all of the features of example 8, wherein the electronic logic circuit is to produce logic signals operably coupled to the configurable optical switch, wherein the logic signals are to dynamically reconfigure the optical coupling according to the configuration information stored within the memory.

Example 10 includes all of the features of any one of examples 6 through 9, wherein the electronic logic circuit is to detect a degradation in optical performance of one or more optical ports coupled to the optical switch.

Example 11 includes all of the features of example 10, wherein the electronic logic circuit is to produce logic signals to be sent to the optical switch to switch a first optical connection from a second optical connection to a third optical connection, wherein the second optical connection has a degradation in operational performance detectable by the electronic logic circuit, and the third optical connection is a substantially functional optical connection.

Example 12 is a system, comprising one or more integrated circuit (IC) packages, comprising an optical die comprising a configurable optical switch comprising an optical switch operably coupled to one or more optical transceivers, an optical connector comprising at least one exo-package optical port, the at least one exo-package optical port operably coupled to the configurable optical switch, wherein the configurable optical switch is to pass an optical signal on the at least one of the one or more exo-package ports to at least one of the one or more optical transceivers, and an IC die comprising electronic circuitry operably coupled to the one or more optical transceivers. wherein the IC package is electrically coupled to a printed circuit board (PCB), and wherein the IC package is electrically coupled to power signal routing within the PCB.

Example 13 includes all of the features of example 12, wherein the one or more IC packages comprise at least a first IC package comprising a first IC die and a first configurable optical switch, the first IC die optically coupled to a second IC package through one or more optical fibers optically coupled to the exo-package ports of the first IC package and to the exo-package ports of the second IC package, the second IC package comprising a second IC die and a second configurable optical switch.

Example 14 includes all of the features of example 13, wherein the first IC die comprises an electronic logic circuit optically coupled to the second configurable optical switch within the second IC package, wherein the electronic logic circuit is coupled to a non-volatile memory comprising configuration information readable by the electronic logic circuit to produce logic signals to be sent to the second configurable optical switch.

Example 15 is a method for making an integrated circuit (IC) package, comprising receiving a package substrate, attaching at least one die comprising a configurable optical switch to the package substrate, and attaching an optical interface comprising one or more exo-package optical ports and one or more intra-package optical ports to the package substrate, wherein the optical interface is optically coupled to the configurable optical switch.

Example 16 includes all of the features of example 15, wherein attaching an optical interface to the package substrate comprises coupling the one or more intra-package optical ports on the optical interface to the configurable optical switch.

Example 17 includes all of the features of example 16, wherein coupling one or more first intra-package optical ports on the optical interface to the configurable optical switch comprises coupling one or more optical fibers between to the one or more intra-package optical ports and to at least one second intra-package optical port on the configurable optical switch, coupling one or more optical integrated waveguides between to the one or more intra-package optical ports and to at least one second intra-package optical port on the configurable optical switch or coupling the one or more intra-package optical ports to at least one second intra-package optical port on the configurable optical switch by free-space optical coupling.

Example 18 includes all of the features of any one of examples 15 through 17, wherein attaching a die comprising a configurable optical switch to the package substrate comprises attaching a die comprising one or more optical transceiver circuits optically coupled to the configurable switch.

Example 19 includes all of the features of any one of examples 15 through 18, further comprising attaching an IC die to the package substrate, wherein the IC die comprises an electronic logic circuit operably coupled to the configurable optical switch.

Example 20 includes all of the features of example 19, wherein attaching an IC die to the package substrate comprises attaching an IC die comprising an integrated optical transceiver circuit to the package substrate.

Example 21 is at least one machine readable medium comprising a plurality of instructions that, in response to being executed on a device, cause the device to configure an optical switch within an IC package by receiving a set of workload instructions, wherein the set of workload instructions includes instructions for a computational task to be executed by the device, determining the ability to connect to one or more peripheral devices comprising an optical switch coupled to the device, and configuring the optical switch on the one or more peripheral devices.

Example 22 includes all of the features of example 21, wherein receiving the set of workload instruction comprises loading software into a memory, wherein the memory is coupled to the device.

Example 23 includes all of the features of examples 21 or 22, wherein configuring the optical switch on the one or more peripheral devices comprises operating the optical switch to make new or break existing optical assignment connections between one or more intra-package optical fibers and one or more exo-package optical fibers, wherein the one or more intra-package and exo-package optical fibers are optically coupled to the optical switch.

Example 24 includes all of the features of any one of examples 21 through 23, wherein configuring the optical switch on the one or more peripheral devices comprises determining optical bandwidth requirements for individual peripheral devices of the one or more peripheral devices.

Example 25 includes all of the features of any one of examples 21 through 24, wherein determining the ability to connect to one or more peripheral devices comprises an optical switch coupled to the device comprises negotiating optical assignments with the peripheral device.

## Claims

1. An integrated circuit (IC) package, comprising:
an optical die comprising a configurable optical switch operably coupled to one or more optical transceivers;
an optical connector comprising at least one exo-package optical port, the at least one exo-package optical port operably coupled to the configurable optical switch, wherein the configurable optical switch is to pass an optical signal on the at least one of the one or more exo-package ports to at least one of the one or more optical transceivers; and
an IC die comprising electronic circuitry operably coupled to the one or more optical transceivers.

2. The IC package of claim 1, wherein the optical die is a first optical die, wherein a second optical die comprises the one or more optical transceivers, and wherein the one or more optical transceivers are operably coupled to the configurable optical switch.

3. The IC package of claim 2, wherein the one or more optical transceivers are optically coupled to the configurable optical switch through an at least one optical fiber, waveguide or a free-space laser coupling.

4. The IC package of any of claims 1 to 3, wherein the IC die is a first die comprising the one or more optical transceivers electrically coupled to the electronic circuitry and optically coupled to a first optical port on the first die, wherein a second die comprises the optical switch and a second optical port optically coupled to the optical switch, and wherein at least one optical fiber is coupled to the first optical port and to the second optical port.

5. The IC package of any of claims 1 to 4, wherein the configurable optical switch is monolithically integrated with at least one optical transceiver, and wherein the configurable optical switch is optically coupled to the one or more optical transceiver circuits.

6. The IC package of any of claims 1 to 5, wherein the configurable optical switch comprises a configurable optical switch, wherein the IC die comprises an electronic logic circuit electrically coupled to the configurable optical switch; and wherein the electronic logic circuit is to configure the configurable optical switch to pass an optical signal on the at least one of the one or more exo-package ports to at least a first intra-package optical port optically coupled to the at least one of the one or more optical transceivers.

7. The IC package of claim 6, wherein the electronic logic circuit is to configure the configurable optical switch to re-route the optical signal on the one or more exo-package ports to at least a second intra-package optical port optically coupled to the at least one of the one or more optical transceivers.

8. The IC package of claim 7, wherein a nonvolatile memory is coupled to the electronic logic circuit, the nonvolatile memory is operable to store binary data comprising switch configuration information readable by the logic circuit, and wherein the memory is programmable through a connection to an external logic device.

9. The IC package of claim 8, wherein the electronic logic circuit is to produce logic signals operably coupled to the configurable optical switch, wherein the logic signals are to dynamically reconfigure the optical coupling according to the configuration information stored within the memory.

10. The IC package of any of claims 6 to 9, wherein the electronic logic circuit is to detect a degradation in optical performance of one or more optical ports coupled to the optical switch.

11. The IC package of claim 10, wherein the electronic logic circuit is to produce logic signals to be sent to the optical switch to switch a first optical connection from a second optical connection to a third optical connection, wherein the second optical connection has a degradation in operational performance detectable by the electronic logic circuit, and the third optical connection is a substantially functional optical connection.

12. A system, comprising:
a power supply; and
an IC package according to any of claims 1 to 11

13. A method for making an integrated circuit (IC) package, comprising:
receiving a package substrate;
attaching at least one die comprising a configurable optical switch to the package substrate; and
attaching an optical interface comprising one or more exo-package optical ports and one or more intra-package optical ports to the package substrate, wherein the optical interface is optically coupled to the configurable optical switch.

14. The method of claim 13, wherein attaching an optical interface to the package substrate comprises coupling the one or more intra-package optical ports on the optical interface to the configurable optical switch.

15. The method of claim 14, wherein coupling one or more first intra-package optical ports on the optical interface to the configurable optical switch comprises:
coupling one or more optical fibers between to the one or more intra-package optical ports and to at least one second intra-package optical port on the configurable optical switch;
coupling one or more optical integrated waveguides between to the one or more intra-package optical ports and to at least one second intra-package optical port on the configurable optical switch; or
coupling the one or more intra-package optical ports to at least one second intra-package optical port on the configurable optical switch by free-space optical coupling.
